# EUROPÄISCHE PATENTSCHRIFT

(11) **EP 1 989 936 B1**
(45) Veröffentlichungstag und Bekanntmachung des Hinweises auf die Patenterteilung: **24.10.2012**
(21) Anmeldenummer: 08101495.3
(22) Anmeldetag: 12.02.2008
(51) Int. Cl.: A01D 41/127

(54) **Messeinrichtung zur Inhaltsstofferfassung von landwirtschaftlichem Erntegut**
Measuring device for recording the content of agricultural harvested material
Dispositif de mesure destiné à la détermination du contenu de récoltes agricoles

(30) Priorität: 11.05.2007 DE 102007022756
(43) Veröffentlichungstag der Anmeldung: 12.11.2008
(73) Patentinhaber: CLAAS Selbstfahrende Erntemaschinen GmbH, 33428 Harsewinkel (DE)
(72) Erfinder: Behnke, Willi, 33803, Steinhagen (DE); Heinrich, André, 04668, Otterwisch (DE); Pfitzner, Christian, 06493, Harzgerode (DE); Günther, Andi, 01187, Dresden (DE)

(56) Entgegenhaltungen:
- EP-A- 0 887 008
- EP-A- 1 523 874
- EP-A- 1 570 723
- DE-A1-102004 038 408
- US-A- 6 100 526

## Beschreibung

Die Erfindung betrifft eine Messeinrichtung zur Inhaltsstofferfassung von landwirtschaftlichem Erntegut nach dem Oberbegriff des Anspruchs 1.

Aus der DE 10 2004 038 408 A1 ist eine Messeinrichtung zur Inhaltsstofferfassung von landwirtschaftlichem Erntegut bekannt. Bei der bekannten Messeinrichtung ist zwischen der eigentlichen Messeinrichtung und dem Erntegutstrom ein Fenster mit einer Scheibe angeordnet, die für das zum Messen verwendete Licht durchlässig ist, ein Eindringen des Ernteguts in den Innenraum der Messeinrichtung jedoch verhindert. Die Scheibe ist bündig mit der Wand des Förderkanals angeordnet. Unter bestimmten Bedingungen weist diese Positionierung den Nachteil auf, dass die Scheibe durch anhaftendes Erntegut oder andere Verunreinigungen stark verschmutzt, so dass aufgrund fehlender Transmission keine optische Messung am Erntegut mehr stattfinden kann, bzw. dass stets nur die Eigenschaften des an der Scheibe haftenden Ernteguts gemessen werden, die nicht mit denen des aktuell strömenden Ernteguts übereinstimmen müssen. Um diesen Nachteil zu beheben, schlägt die DE 10 2004 038 408 A1 vor, die Scheibe der Messeinrichtung in den Erntegutstrom hineinschwenkbar zu gestalten, um anhaftende Verunreinigungen durch das mit hoher Strömungsgeschwindigkeit vorbeiströmende Erntegut von der Scheibe zu lösen und diese somit zu reinigen. Nachteilig an einer derart bekannten Messeinrichtung ist es, dass die Scheibe während des Reinigungsprozesses einer starken mechanischen Belastung ausgesetzt wird, was dazu führt, dass sich aufgrund der mechanischen Einwirkung des Erntegutes Kratzer oder dergleichen auf der Oberfläche der Scheibe bilden können, die zum Einen das Messergebnis verfälschen können, aber zum Anderen auch die Neigung zum Anhaften von Verunreinigungen erhöhen. Somit verschleißt die Scheibe sehr schnell und muss häufig gewechselt werden, was aufgrund der sehr empfindlichen Sensoren, beispielsweise einem Spektrometer, nur unter Reinraumbedingungen möglich ist, was einen erheblichen Kosten- und Zeitaufwand bedeutet. Zusätzlich Ist eine sichere Reinigung der Scheibe bei einer derartigen Messeinrichtung nicht gegeben, da das anströmende Gut eher noch dazu führt, dass zusätzliches Erntegut an der Scheibe anhaftet Als weiterer Nachteil ist es anzusehen, dass durch das Einschwenken der Messeinrichtung der Gutstrom gestört wird. Weiterhin ist bei einem derartigen Aufbau als Nachteilig anzusehen, dass für das Verschwenken der Scheibe oder der gesamten Messeinrichtung ein entsprechender Verschwenkmechanismus bereitgestellt werden muss, der die Scheibe auch bei starker mechanischer Belastung durch das Erntegut in der Reinigungsposition halten muss.

Aus der US 6,100,526 ist eine Messvorrichtung der Eingangs genannten bekannt, welche ein Sensorgehäuse mit einer darin angeordneten optischen Messeinrichtung umfasst. Das Sensorgehäuse ist mit einer transparenten Scheibe versehen, welche parallel zu einer Öffnung in einem Förderkanal und beabstandet zu dieser angeordnet ist.

Aufgabe der vorliegenden Erfindung ist es, eine Messeinrichtung zur Inhaltstofferfassung von landwirtschaftlichem Erntegut gemäß dem Oberbegriff des Anspruchs 1 derart weiterzubilden, dass sie einfach und kostengünstig ausgebildet ist, über lange Standzeiten verfügt und bei der nachteilige Einflüsse durch anhaftende Verunreinigungen vermieden oder zumindest vermindert werden.

Diese Aufgabe wird erfindungsgemäß durch die kennzeichnenden Merkmale des Anspruchs 1 gelöst.

Dadurch, dass die Schutzscheibe derart zurückversetzt hinter der Öffnung des Förderkanals und beabstandet zum Gutfluss des Erntegutes angeordnet ist, dass sich zwischen dem Gutfluss des Erntegutes und der Schutzscheibe ein Spalt bildet, kommt die Schutzscheibe mit dem Erntegut nicht In Berührung, so dass keine Verunreinigungen an der Schutzscheibe anhaften können. Dadurch, dass die Schutzscheibe nicht mit dem Erntegut in Berührung kommt, ergibt sich der weitere Vorteil, dass die Schutzscheibe quasi keinem Verschleiß ausgesetzt ist, wodurch sie eine sehr lange Standzeit aufweist und aus kostengünstigen Material ausgebildet sein kann. Der Aufbau der Messeinrichtung ist sehr einfach und kostengünstig ausgebildet, da die Messeinrichtung stationär im Bezug auf den Förderkanal angeordnet ist.

Bei einer vorteilhaften Weiterbildung der Erfindung ist ein Medium in den Spalt einbringbar, so dass sicher verhindert werden kann, dass Erntegutteilchen in den Spalt eindringen und an der Schutzscheibe anhaften können. Durch das Medium wird zusätzlich ein Führen des Gutstroms vor der Messeinrichtung realisiert, was zur Verbesserung der Messergebnisse führt.

Vorteilhaft ist das Medium fortlaufend oder temporär in den Spalt einbringbar. Bei einer fortlaufenden Einbringung des Mediums wird der Gutstrom dauerhaft geführt und die Schutzscheibe dauerhaft vor Verunreinigungen geschützt. Eine temporäre Einbringung des Mediums bietet den Vorteil, dass eine derartige Messeinrichtung sehr energieeffizient betreibbar ist, da das Medium nur dann eingebracht zu werden braucht, wenn eine Messung erfolgt und/oder wenn eine beginnende Verunreinigung der Scheibe sensiert wird, die durch das Medium behoben wird. Sollte die Inhaltsstofferfassung nicht dauerhaft sondern beispielhaft nur in bestimmten Zeitabständen erfolgen, so ist es denkbar, dass das Medium mit einem gewissen kurzen Vorlauf in den Spalt eingebracht wird, wodurch sichergestellt ist, dass die Schutzscheibe zum Beginn der Messung frei von Verunreinigungen ist.

Ein konstruktiv einfacher und energieeffizienter Aufbau der Messeinrichtung ist dadurch realisierbar, dass das Medium durch den in dem Förderkanal befindlichen Gutfluss in den Spalt eingesaugt wird. Die Summe aus dynamischem Druck und statischem Druck an der Messstelle im Förderkanal entspricht dem Umgebungsdruck zuzüglich der Strömungsverluste des Gutstroms im Förderkanal von der Messstelle aus bis zum Ende des Förderkanals, Sind die Strömungsverluste gering, so entsteht an der Messstelle ein Unterdruck, der dazu führt, dass das Medium durch entsprechende Öffnungen in den Spalt eingesaugt wird, Somit sind keine weiteren Förderelemente für das Medium erforderlich.

Um eine gezielte und steuerbare Einbringung des Mediums in den Spalt zu gewährleisten, wird das Medium bei einer vorteilhaften Weitebildung der Erfindung mittels eines Gebläses und/oder einer Pumpe und/oder einer mechanischen Fördereinrichtung in den Spalt eingebracht.

Vorteilhaft ist das Gebläse und/oder die Pumpe und/oder die mechanische Fördereinrichtung beabstandet zu dem Spalt angeordnet und das Medium wird mittels einer Leitung in den Spalt gefördert, so dass durch das Gebläse und/oder die Pumpe und/oder die mechanische Fördereinrichtung das visuelle Erscheinungsbild des Förderkanals nur unwesentlich beeinträchtigt wird. Ein etwas längerer Förderweg des Mediums bietet zusätzlich den Vorteil, dass die Geschwindigkeitsverteilung des Mediums über dem Querschnitt verbessert wird. Eine derartige Anordnung bietet den weiteren Vorteil, dass das Gebläse und/oder die Pumpe und/oder die mechanische Fördereinrichtung gemeinsam mit weiteren Arbeitsaggregaten (beispielsweise einem Auswurfbeschleuniger an einem selbstfahrenden Feldhäcksler) betreibbar ist, so dass keine zusätzliche Antriebseinheit oder kein zusätzlicher Antriebsstrang für das Gebläse und/oder die Pumpe und/oder die mechanische Fördereinrichtung benötigt wird.

Die Leitung zur Förderung des Mediums von dem Gebläse und/oder der Pumpe und/oder der mechanischen Fördereinrichtung ist vorteilhaft an oder in dem Förderkanal ausgebildet, so dass sich ein konstruktiv einfacher Aufbau und ein visuell ansprechendes Erscheinungsbild ergibt. Beispielsweise besteht die Möglichkeit, zumindest eine Seitenwandung des Förderkanals doppelwandig auszubilden, so dass der sich bildende Querschnitt als Leitung dient. Weiterhin ist es möglich, durch die für das Medium ausgebildete Leitung weitere Elektro- und/oder Hydraulikleitungen zu führen, was den konstruktiven Aufbau weiterhin vereinfacht.

Vorteilhaft ist das Medium ein Fluid, welches im einfachsten Fall als Luftstrom ausgebildet ist. Alternativ ist es natürlich ebenso möglich, dass das Fluid ein anderes Gas und/oder eine irgendwie geartete Flüssigkeit ist.

Bei einer anderen vorteilhaften Ausbildung der Erfindung ist das Medium eine die Schutzscheibe zumindest partiell abdeckende Folie, welche die Schutzscheibe sicher vor dem Erntegut schützt und bei eventueller Verschmutzung schnell und kostengünstig austauschbar ist. Beispielsweise kann je eine Rolle beidseitig des Spaltes angeordnet sein, wobei die Folie von der einen Rolle an der Schutzscheibe vorbei auf die andere Rolle gezogen wird. Sobald die erste Rolle keine Folie mehr aufweist, ist sie einfach austauschbar. Alternativ sind weitere konstruktive Lösung beim Einsatz einer Folie denkbar, so dass die genannte Ausbildung beispielhaft zu verstehen ist.

Um die Dimension des Spaltes einstellbar zu gestalten, damit sowohl die Führung des Mediums, die Führung des Erntegutes aber auch die Messung des Sensors optimiert wird, ist bei einer vorteilhaften Weiterbildung der Erfindung seitlich des Spaltes zumindest ein Leitelement angeordnet.

Da es trotz der beschriebenen Maßnahmen dazu kommen kann, dass Verunreinigungen an der Schutzscheibe anhaften, beispielsweise Staubablagerungen bei langen Stillstandszeiten, ist bei einer vorteilhaften Weiterbildung die Messeinrichtung derart ausgebildet, dass sie eventuell an der Schutzscheibe anhaftende Verunreinigungen sensiert und bei einer entsprechenden Sensierung ein Warnsignal, wie beispielweise ein optisches oder akustisches Signal abgibt, was dem Bediener der Messeinrichtung einen Hinweis gibt, die Schutzscheibe von den Verunreinigungen zu befreien. Dies kann manuell erfolgen oder er aktiviert die Einbringung des Mediums und/oder er aktiviert eine gesonderte Reinigungseinrichtung für die Schutzscheibe. Weiterhin ist es möglich, dass bei der Sensierung von Verunreinigungen an der Schutzscheide die Einbringung des Mediums in den Spalt automatisch von der Messeinrichtung aktiviert wird, um die Verunreinigungen von der Schutzscheibe zu lösen.

Bei einer vorteilhaften Weiterbildung der Erfindung ist die Schutzscheibe quer zur Gutflussrichtung über zumindest 1/3 der Breite des Förderkanals ausgebildet, wobei der mittels des Sensors erfasste Messbereich annähernd rechteckig ausgebildet ist und im Wesentlichen der Länge und Breite der Schutzscheibe entspricht, so dass die Inhaltsstofferfassung über einen möglichst großen Querschnitt des Förderkanals erfolgt, was eine bessere Aussage über die Inhaltsstoffe und/oder Eigenschaften des landwirtschaftlichen Erntegutes im Förderkanal ermöglicht. Ein geeigneter Sensor arbeitet beispielsweise mit Licht im nahinfraroten Wellenlängenbereich im Reflexions- (NIR) oder Transmissionsmodus (NIT), wie er in der DE 10 2006 035 906.2 beschrieben wird, deren Inhalt durch Verweis mit in die vorliegenden Unterlagen aufgenommen wird. Alternativ sind auch alle anderen Arten von Sensoren wie beispielsweise optische Sensoren in Form einer Kamera oder Mikrowellensensoren denkbar.

Vorteilhaft ist die Messeinrichtung an einer landwirtschaftlichen Erntemaschine angeordnet. Hier ist beispielsweise die Montage an einem Auswurfkanal eines selbstfahrenden Feldhäckslers oder die Montage an einem Förderetevator eines Mähdreschers denkbar. Diese Angaben sind jedoch nur beispielhaft zu verstehen und grenzen die möglichen Einsatzfälle bei landwirtschaftlichen Erntemaschine keinesfalls ein.

Anhand der beigefügten Zeichnungen wird die Erfindung nachfolgend näher erläutert.
Es zeigen:
- Fig. 1:: einen Feldhäcksler in einer schematischen Seitenansicht mit einer erfindungsgemäßen Messeinrichtung,
- Fig. 2:: eine längs geschnittene vergrößerte Ansicht des Details A aus Fig. 1,
- Fig. 3:: eine quer geschnittene vergrößerte Ansicht des Details A aus Fig. 1,
- Fig. 4:: eine Ansicht gemäß Fig. 2 in einer zweiten Ausführungsform und
- Fig. 5:: eine vergrößerte Ansicht des Details B aus Fig. 1.

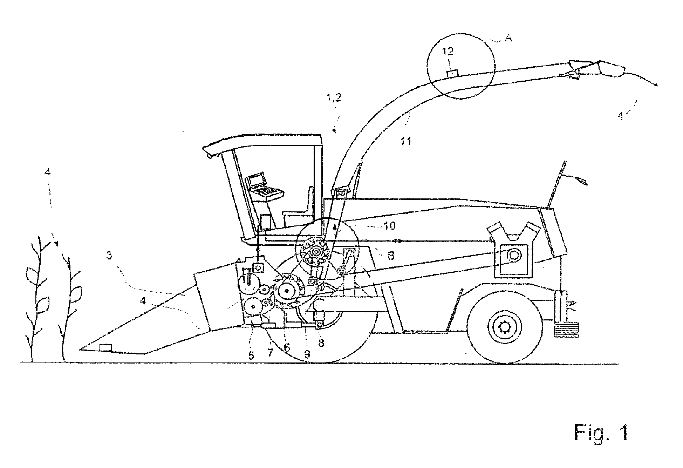

Figur 1 zeigt eine schematische Seitenansicht mit bereichsweiser Schnittdarstellung einer als selbstfahrender Feldhäcksler (1) ausgeführten landwirtschaftliche Erntemaschine (2). Frontseitig ist dem Feldhäcksler (1) ein Vorsatzgerät (3) zugeordnet, welches im Arbeitsbetrieb des Feldhäckslers (1) das Erntegut (4) aufnimmt, schneidet und es den nachgeordneten rotierenden Einzugs- und Vorpresswalzen (5) zuführt. Die Einzugs- und Vorpresswalzen (5) leiten das Erntegut (4) der nachgeordneten und rotierenden Häckseltrommel (6) zu, welche das Erntegut (4) im Zusammenwirken mit einer Gegenschneide (7) zerkleinert. Das zerkleinerte Erntegut (4) wird an eine Nachzerkleinerungsvorrichtung (8) übergeben, die die Erntegutkörner, wie beispielsweise Maiskörner anschlägt und über einen Förderschacht (9) an einen Nachbeschleuniger (10) übergibt. Der Nachbeschleuniger (10) beschleunigt das zerkleinerte Erntegut (4) und fördert es über einen horizontal und vertikal verstellbaren, als Auswurfkrümmer ausgebildeten Förderkanal (11) auf eine nicht dargestellte, dem Förderkanal (11) zugeordnete Transportvorrichtung. An dem Förderkanal (11) ist die erfindungsgemäße und nachfolgend noch näher erläuterte Messeinrichtung (12) zur Analyse des durch den Auswurfkrümmer geförderten Erntegutes (4) angeordnet.
Es ist ebenso denkbar die Messeinrichtung (12) an einem Zuführkanal einer Ballenpresse oder im Schrägförderer oder der Korntankbefüllschnecke eines Mähdreschers anzuordnen.
Die Messeinrichtung (12) dient zur an sich bekannten Bestimmung bestimmter Inhaltsstoffe des Erntegutes (4). Die Messeinrichtung (12) erfasst die Anteile der Inhaltsstoffe im Erntegut (4) wie beispielsweise den Wassergehalt, den Rohprotein- oder den Fettgehalt und darüber hinaus weitere Parameter des Erntegutes (4) wie beispielsweise die Faserlänge, den Fasergehalt und die Trockensubstanz.

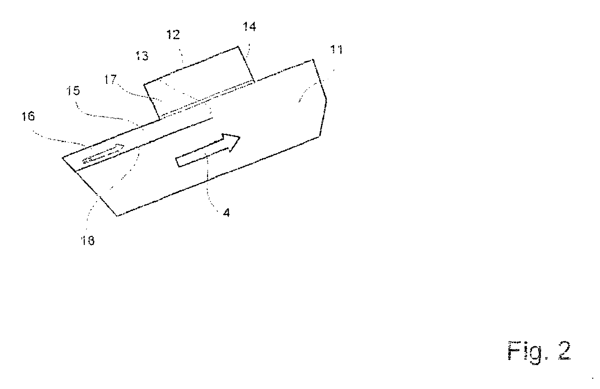

Figur 2 zeigt in einem Längsschnitt eine vergrößerte Ansicht des Details A aus der Figur 1. In einer Wandung des Förderkanals (11) ist eine Öffnung (17) ausgebildet, der die Messeinrichtung (12) zugeordnet ist. Eine Schutzscheibe (14) der Messeinrichtung (12) ist dem Erntegut (4) zugewandt, so dass dessen Inhaltsstoffe mittels des hier nicht dargestellten Sensors erfasst werden können. Mittels einer Wandung (18) des Förderkanals (11) bildet sich zwischen der Schutzscheibe (14) und dem Gutfluss des Ernteguts (4) ein Spalt (13), so dass die Schutzscheibe (14) nicht in direktem Kontakt mit dem Erntegut (4) steht. Um zu verhindern, dass einzelne Teile des Erntegutes (4) an der Schutzscheibe (14) anhaften und für Verunreinigungen sorgen, wird durch die durch das Gehäuse des Förderkanals (11) und die Wandung (18) gebildete Leitung (15) ein als Luftstrom (16) ausgebildetes Medium in den Spalt (13) eingeblasen. Der Luftstrom (16) unterstützt zusätzlich die weitere Förderung des Erntegutes (4) in dem Förderkanal.

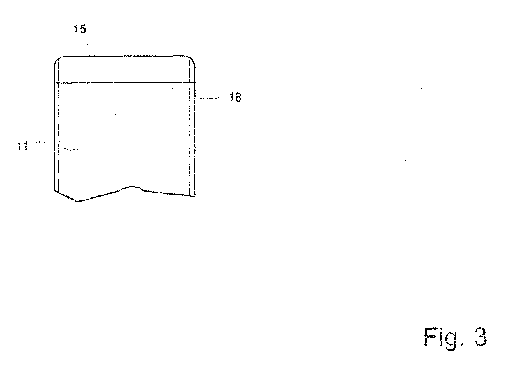

Figur 3 zeigt in einem Querschnitt eine vergrößerte Ansicht des Details A aus der Figur 1. Das Gehäuse des Förderkanals (11) ist an seiner oberen Seite mittels der Wandung (18) als doppelwandiges Hohlkammerprofil ausgebildet, so dass ein Teil des Förderkanals (11) zur Förderung des hier nicht dargestellten Erntegutes dient, und der andere Teil als Leitung (15) für das in den Spalt einbringbare Medium dient.

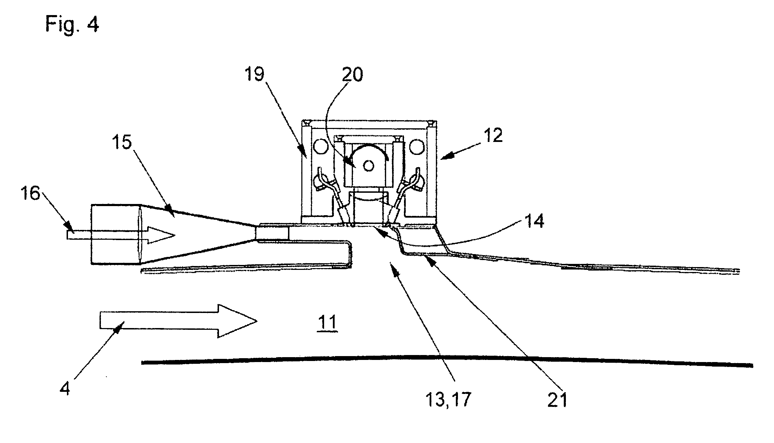

Figur 4 zeigt die in Figur 2 gezeigte Ansicht in einer zweiten Ausführungsform. In dem hier nur teilweise dargestellten Gehäuse des Förderkanals (11) ist eine Öffnung (17) ausgebildet. Der Öffnung (17) ist eine Messeinrichtung (12) zugeordnet, die aus einem Gehäuse (19), einer das Gehäuse (19) in Richtung der Öffnung (17) abschließenden Schutzscheibe (14) und einem in dem durch das Gehäuse (19) und die Schutzscheibe (14) gebildeten Raum angeordneten Sensor (20) besteht. Bezüglich der Funktionsweise der Messeinrichtung (12) wird auf die DE 10 2006 035 906.2 verwiesen, deren Inhalt durch Verweis mit in die vorliegenden Unterlagen aufgenommen wird. Der Sensor (20) erfasst einen breiten, annähernd rechteckigen Querschnittsbereich des in dem Förderkanal (11) geförderten Erntegutes (4). Um die Schutzscheibe (14) vor Verunreinigungen durch das Erntegut (4) zu schützen, ist sie derart zurückversetzt in der Öffnung (17) angeordnet, dass sich zwischen ihr und dem Erntegut (4) eine Spalt (13) bildet. In den Spalt (13) wird von zumindest einer Seite her ein mittels einer Leitung (15) zugeführtes, als Luftstrom (16) ausgebildetes Medium eingeblasen, das zusätzlich verhindert, dass Teile des Erntegutes (4) in den Spalt (13) gelangen. Zur besseren Führung des Luftstromes (16) und zur eindeutigen Begrenzung des Messbereichs des Sensors (20) ist in dem Spalt (13) ein Leitelement (21) angeordnet.

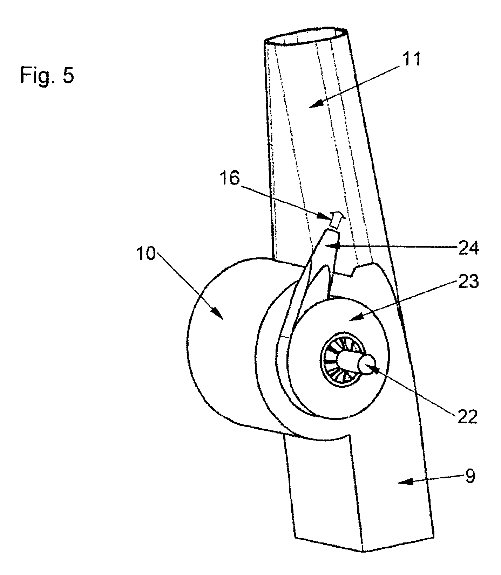

Figur 5 zeigt eine vergrößerte Ansicht von Außen des Details B aus der Figur 1. Im Anschluss an den Förderschacht (9) ist der Nachbeschleuniger (10) angeordnet, der das Erntegut beschleunigt und in den Förderkanal (11) übergibt. Auf einer Verlängerung der Antriebswelle (22) des Nachbeschleunigers (10) ist ein Gebläse (23) angeordnet, das den Luftstrom (16) erzeugt. Somit ist für das Gebläse (23) keine zusätzliche Antriebseinheit auf dem Feldhäcksler (1) erforderlich. Das Gebläse (23) verfügt über einen Gebläseluftkanal (24), durch welchen der erzeugte Luftstrom (16) in hier nicht dargestellter Weise in die hier ebenfalls nicht dargestellte Leitung gefördert wird. Durch die Leitung wird der Luftstrom (16) dann zu dem Spalt gefördert und verhindert in beschriebener Weise ein Anhaften von Emtegutbestandteilen an der Schutzscheibe.

### Bezugszeichenliste;

- 1: Feldhäcksler
- 2: Arbeitsmaschine
- 3: Vorsatzgerät
- 4: Erntegut
- 5: Einzugs- und Vorpresswalzen
- 6: Häckseltrommel
- 7: Gegenschneide
- 8: Nachzerkleinerungsvorrichtung
- 9: Förderschacht
- 10: Nachbeschleuniger
- 11: Förderkanal
- 12: Messeinrichtung
- 13: Spalt
- 14: Schutzscheibe
- 15: Leitung
- 16: Luftstrom
- 17: Öffnung
- 18: Wandung
- 19: Gehäuse
- 20: Sensor
- 21: Leitelement
- 22: Antriebswelle
- 23: Gebläse
- 24: Gebläseluftkanal

## Patentansprüche

1. Messeinrichtung (12) zur Erfassung von inhaltsstoffen und/oder Eigenschaften von landwirtschaftlichem Erntegut (4), mit einem Gehäuse (19), zumindest einer das Gehäuse (19) in Richtung des Erntegutes (4) abschließenden Schutzscheibe (14), zumindest einem in dem durch das Gehäuse (19) und die Schutzscheibe (14) gebildeten Raum angeordneten Sensor (20), einem Förderkanal (11) für das Erntegut (4), wobei die Messeinrichtung (12) einer in einer Seitenwandung des Förderkanals (11) ausgebildeten Öffnung (17) zugeordnet ist und das Erntegut (4) während der Erfassung in dem Förderkanal (11) an der Messeinrichtung (12) vorbeiführbar ist,
wobei die Schutzscheibe (14) derart zurückversetzt hinter der Öffnung (17) des Förderkanals (11) und beabstandet zum Gutfluss des Erntegutes (4) angeordnet ist, dass sich zwischen dem Gutfluss des Erntegutes (4) und der Schutzscheibe (14) ein Spalt (13) **dadurch gekennzeichnet, dass** Medium mittels einer an oder in dem Förder-kanal (11) ausgebildeten Leitung (15) in den Spalt (13) einbringbar ist.

2. Messeinrichtung (12) nach Anspruch 1, **dadurch gekennzeichnet, dass** das Medium fortlaufend oder temporär in den Spalt (13) einbringbar ist.

3. Messeinrichtung (12) nach einem der Ansprüche 1 bis 2 **dadurch gekennzeichnet, dass** das Medium durch den in dem Förderkanal (11) befindlichen Gutfluss des Erntegutes (4) in den Spalt (13) eingesaugt wird.

4. Messeinrichtung (12) nach einem der Ansprüche 1 bis 2, **dadurch gekennzeichnet, dass** das Medium mittels eines Gebläses (23) und/oder einer Pumpe und/oder einer mechanischen Fördereinrichtung in den Spalt (13) eingebracht wird.

5. Messeinrichtung (12) nach Anspruch 4, **dadurch gekennzeichnet, dass** das Gebläse (23) und/oder die Pumpe und/oder die mechanische Fördereinrichtung beabstandet zu dem Spalt (13) angeordnet ist und das Medium mittels einer Leitung (15) in den Spalt (13) gefördert wird.

6. Messeinrichtung (12) nach einem der Ansprüche 1 bis 3, **dadurch gekennzeichnet, dass** die Leitung (15) durch das Gehäuse des Förderkanals (11) und eine Wandung (18) ausgebildet ist.

7. Messeinrichtung (12) nach einem der Ansprüche 2 bis 6, **dadurch gekennzeichnet, dass** das Medium ein Fluid ist.

8. Messeinrichtung (12) nach Anspruch 7, **dadurch gekennzeichnet, dass** das Fluid ein Luftstrom (16) ist.

9. Messeinrichtung (12) nach einem der Ansprüche 2 bis 6, **dadurch gekennzeichnet, dass** das Medium eine die Schutzscheibe (14) zumindest partiell abdeckende Folie ist.

10. Messeinrichtung (12) nach einem der vorstehenden Ansprüche, **dadurch gekennzeichnet, dass** seitlich des Spaltes (13) zumindest ein Leitelement (21) angeordnet ist.

11. Messeinrichtung (12) nach einem der vorstehenden Ansprüche, **dadurch gekennzeichnet, dass** die Messeinrichtung (12) eventuell an der Schutzscheibe (14) anhaftende Verunreinigungen sensiert und ein entsprechendes Warnsignal abgibt und/oder die Einbringung des Mediums in den Spalt (13) aktiviert.

12. Messeinrichtung (12) nach einem der vorstehenden Ansprüche, **dadurch gekennzeichnet, dass** die Schutzscheibe (14) quer zur Gutflussrichtung des Erntegutes (4) über zumindest 1/3 der Breite des Förderkanals (11) ausgebildet ist.

13. Messeinrichtung (12) nach Anspruch 13, **dadurch gekennzeichnet, dass** der mittels des Sensors (20) erfasste Messbereich annähernd rechteckig ausgebildet ist und im Wesentlichen der Länge und Breite der Schutzscheibe (14) entspricht.

14. Messeinrichtung (12) nach einem der vorstehenden Ansprüche, **dadurch gekennzeichnet, dass** die Messeinrichtung (12) an einer landwirtschaftlichen Erntemaschine angeordnet ist.

## Claims

1. A measuring device (12) for detecting constituents in and/or properties of agricultural crop material (4) comprising a housing (19), at least one protective pane (14) closing the housing (9) in the direction of the crop material (4), at least one sensor (20) arranged in the space formed by the housing (19) and the protective pane (14), a conveyor passage (11) for the crop material (4), wherein the measuring device (12) is associated with an opening (17) in a side wall of the conveyor passage (11) and the crop material (4) can be moved past the measuring device (12) during detection in the conveyor passage (11), wherein the protective pane (14) is arranged set back behind the opening (17) of the conveyor passage (11) and in spaced relationship with the flow of the crop material (4) in such a way that a gap (13) is formed between the flow of the crop material (4) and the protective pane (14), **characterised in that** a medium can be introduced into the gap (13) by means of a conduit (15) on or in the conveyor passage (11).

2. A measuring device (12) according to claim 1 **characterised in that** the medium can be introduced into the gap (13) continuously or temporarily.

3. A measuring device (12) according to one of claims 1 and 2 **characterised in that** the medium is sucked into the gap (13) by the flow of the crop material (4), that is in the conveyor passage (11).

4. A measuring device (12) according to one of claims 1 and 2 **characterised in that** the medium is introduced into the gap (13) by means of a blower (23) and/or a pump and/or a mechanical conveyor device.

5. A measuring device (12) according to claim 4 **characterised in that** the blower (23) and/or the pump and/or the mechanical conveyor device is arranged in spaced relationship with the gap (13) and the medium is conveyed into the gap (13) by means of a conduit (15).

6. A measuring device (12) according to one of claims 1 to 3 **characterised in that** the conduit (15) is provided by the housing of the conveyor passage (11) and a wall (18).

7. A measuring device (12) according to one of claims 2 to 6 **characterised in that** the medium is a fluid.

8. A measuring device (12) according to claim 7 **characterised in that** the fluid is an air flow (16).

9. A measuring device (12) according to one of claims 2 to 6 **characterised in that** the medium is a film which at least partially covers the protective pane (14).

10. A measuring device (12) according to one of the preceding claims **characterised in that** at least one guide element (21) is arranged laterally of the gap (13).

11. A measuring device (12) according to one of the preceding claims **characterised in that** the measuring device (12) senses impurities possibly adhering to the protective pane (14) and delivers a suitable warning signal and/or activates introduction of the medium into the gap (13).

12. A measuring device (12) according to one of the preceding claims **characterised in that** the protective pane (14) is provided transversely to the direction of flow of the crop material (4) over at least one-third of the width of the conveyor passage (11).

13. A measuring device (12) according to claim 12 **characterised in that** the measuring region detected by means of the sensor (20) is approximately rectangular and substantially corresponds to the length and width of the protective pane (14).

14. A measuring device (12) according to one of the preceding claims **characterised in that** the measuring device (12) is arranged on an agricultural harvester.

## Revendications

1. Dispositif de mesure (12) destiné à la détermination du contenu et/ou des propriétés de récoltes agricoles (4), comportant un carter (19), au moins un vitrage de protection (14) isolant le carter (19) en direction des récoltes (4), au moins un capteur (20) disposé dans l'espace formé par le carter (19) et le vitrage de protection (14), une canalisation de transport (11) pour la récolte (4), le dispositif de mesure (12) étant disposé dans une ouverture (17) formée dans une paroi latérale de la canalisation de transport (11) et la récolte (4) pouvant passer devant le dispositif de mesure (12) dans la canalisation de transport (11) pendant la détermination,
le vitrage de protection (14) étant disposé de telle sorte, à l'écart derrière l'ouverture (17) de la canalisation de transport (11), et espacé du flux de produit de la récolte (4), qu'une fente (13) se forme entre le flux de produit de la récolte (4) et le vitrage de protection (14), **caractérisé en ce qu'**un milieu peut être introduit sur ou dans la fente (13) dans la conduite (15) formée dans la canalisation de transport (11).

2. Dispositif de mesure (12) selon la revendication 1 **caractérisé en ce que** le milieu peut être introduit dans la fente (13) de manière continue ou temporaire.

3. Dispositif de mesure (12) selon l'une des revendications de 1 à 2 **caractérisé en ce que** le milieu est aspiré dans la fente (13) par le flux de produit de la récolte (4) se trouvant dans la canalisation de transport (11).

4. Dispositif de mesure (12) selon l'une des revendications de 1 à 2 **caractérisé en ce que** le milieu peut être introduit dans la fente (13) au moyen d'une soufflerie (23), et/ou d'une pompe, et/ou d'un dispositif de transport mécanique.

5. Dispositif de mesure (12) selon la revendication 4 **caractérisé en ce que** la soufflerie (23), et/ou la pompe, et/ou le dispositif de transport mécanique, est disposé espacé de la fente (13) et que le milieu est convoyé dans la fente (13) au moyen d'une conduite (15).

6. Dispositif de mesure (12) selon l'une des revendications de 1 à 3 **caractérisé en ce que** la conduite (15) est formée par le carter de la canalisation de transport (11) et une paroi (18).

7. Dispositif de mesure (12) selon l'une des revendications de 2 à 6 **caractérisé en ce que** le milieu est un fluide.

8. Dispositif de mesure (12) selon la revendication 7 **caractérisé en ce que** le fluide est un courant d'air (16).

9. Dispositif de mesure (12) selon l'une des revendications de 2 à 6 **caractérisé en ce que** le milieu est une feuille recouvrant au moins partiellement le vitrage de protection (14).

10. Dispositif de mesure (12) selon l'une des revendications précédentes **caractérisé en ce qu'**au moins un élément conducteur (21) est disposé à côté de la fente (13).

11. Dispositif de mesure (12) selon l'une des revendications précédentes **caractérisé en ce que** le dispositif de mesure (12) est éventuellement sensible à des impuretés se fixant sur le vitrage de protection (14) et délivre un signal d'alarme correspondant et/ou active l'introduction du milieu dans la fente (13).

12. Dispositif de mesure (12) selon l'une des revendications précédentes **caractérisé en ce que** le vitrage de protection (14) est construit sur au moins 1/3 de la largeur de la canalisation de transport (11) perpendiculairement à la direction du flux de produit de la récolte (4).

13. Dispositif de mesure (12) selon la revendication 13 **caractérisé en ce que** le domaine de mesure accessible au moyen du capteur (20) est de forme à peu près rectangulaire et correspond dans l'ensemble à la longueur et à la largeur du vitrage de protection (14).

14. Dispositif de mesure (12) selon l'une des revendications précédentes **caractérisé en ce que** le dispositif de mesure (12) est disposé sur une machine agricole pour la récolte.
